# EUROPÄISCHE PATENTSCHRIFT

(11) **EP 0 640 786 B1**
(45) Veröffentlichungstag und Bekanntmachung des Hinweises auf die Patenterteilung: **14.05.1997**
(21) Anmeldenummer: 94105424.9
(22) Anmeldetag: 08.04.1994
(51) Int. Cl.: F16L 19/02, F16L 19/08, F16L 33/26, H02G 3/06

(54) **Kombinierte Schlauch- und Kabelverschraubung**
Combined threaded connection for cable and hose
Raccord à vis combiné pour câble et tuyau souple

(30) Priorität: 27.08.1993 DE 9312880 U
(43) Veröffentlichungstag der Anmeldung: 01.03.1995
(73) Patentinhaber: PFLITSCH GmbH. & Co. KG., 42499 Hückeswagen (DE)
(72) Erfinder: Pflitsch, Otto, D-42499 Hückeswagen (DE)
(74) Vertreter: Patentanwälte Dipl.-Ing. Conrad Köchling Dipl.-Ing. Conrad-Joachim Köchling

(56) Entgegenhaltungen:
- EP-A- 0 536 844
- EP-A- 0 545 410
- DE-C- 225 220
- FR-A- 1 166 054
- FR-A- 1 286 787
- GB-A- 2 130 446
- US-A- 5 087 795

## Beschreibung

Die Erfindung betrifft eine kombinierte Schlauch- und Kabelverschraubung, bestehend aus einem Doppelnippel mit Dichteinsatz und Druckschraube als Kabelklemmverschraubung sowie einer Klemmeinrichtung für einen Hüllschlauch.

Im Stand der Technik ist eine derartige kombinierte Schlauch- und Kabelverschraubung bekannt. Dabei ist auf den Doppelnippel mit Dichteinsatz zunächst die Druckschraube aufgeschraubt, mittels derer der Dichteinsatz beaufschlagt werden kann und dicht an ein durchgestecktes Kabel angelegt werden kann. An der dem Dichteinsatz abgewandten Seite der Druckschraube ist ein Gewindestutzen angeordnet, auf den eine Überwurfmutter aufgeschraubt werden kann. In der Überwurfmutter ist ein Klemmring gehalten.

Zum Abdichten eines das abzudichtende Kabel umhüllenden Schlauches kann der entsprechende Schlauch durch die Überwurfmutter bis zu einer Anschlagfläche in dem Gewindestutzen geführt werden, woraufhin dann nach Anziehen der Überwurfmutter mittels des Klemmringes Klemmkräfte auf den eingeschobenen Schlauch ausgeübt werden können. Dabei ist der Klemmring geschlitzt, wobei die Schlitzenden einen Abstand voneinander aufweisen, der annähernd einem Viertel des Umfanges des einzusteckenden Schlauches entspricht.

Mit einer solchen Ausbildung ist zwar eine feste Verschraubung auf einem durchgeschobenen Kabel möglich, jedoch ist die Schlauchklemmung nicht ausreichend, um eine einwandfreie Dichtigkeit zu gewährleisten. Darüber hinaus ist die Baulänge der kombinierten Kabel- und Schlauchverschraubung relativ groß, da zwei Verschraubungen quasi hintereinander angeordnet sind.

Ausgehend von diesem Stand der Technik liegt der Erfindung die Aufgabe zugrunde, eine kombinierte Schlauch- und Kabelverschraubung zu schaffen, die bei verbesserter Dichtwirkung eine erheblich verminderte Baulänge aufweist.

Zur Lösung dieser Aufgabe wird vorgeschlagen, daß in die Druckschraube ein quer geschlitzter Klemmring eingesetzt ist, der an seinem dem Dichteinsatz zugewandten Ende radial innenliegend eine Schrägflanke oder ballige Flanke aufweist, die auf den Dichteinsatz beim Anziehen der Druckschraube einwirkt, daß der Klemmring an seinem dem Dichteinsatz abgewandten Ende radial innen eine Schrägflanke als Einführhilfe und Klemmkante für einen eingesteckten, bis an den Dichteinsatz reichenden Schlauch aufweist und radial außen einen balligen oder geschrägten Bereich aufweist, der einen nach radial innen gerichteten Kragen an dem dem Dichteinsatz abgewandten Ende der Druckschraube durchgreift und beim Anziehen der Druckschraube nach radial innen drängbar ist.

Durch diese Ausbildung wird die gesamte Baulänge erheblich vermindert, prinzipiell auf die Baulänge einer normalen Kabelverschraubung reduziert, wobei zudem eine verbesserte Klemmwirkung auf den eingesteckten Schlauch erzielbar ist, so daß eine erheblich bessere Abdichtung gegen eintretende Feuchte erreicht ist.

Nach dem Aufsetzen der Kabelverschraubung auf ein Kabel und nach dem Einstecken eines entsprechenden Schlauches in die dem Einsatz abgewandte Mündung der Druckschraube kann die Druckschraube angezogen werden, wobei die Druckschraube zunächst mit dem nach radial innen gerichteten Kragen an ihre dem Dichteinsatz abgewandten Seiten auf den radial außenliegenden balligen oder geschrägten Bereich des Klemmringes einwirkt, so daß dessen an diesem Ende befindliche Klemmkante für den eingesteckten Schlauch nach radial innen gedrängt und der Klemmring in seinem Durchmesser soweit vermindert wird, daß der Schlitz des Klemmringes geschlossen ist.

Beim weiteren Anziehen der Druckschraube erfolgt eine Axialverschiebung des Klemmringes samt Schlauch entsprechend der Schraubbewegung der Druckschraube, wobei die dem Dichteinsatz zugewandte ballige oder schräge Flanke des Klemmringes auf den Dichteinsatz aufläuft und diesen in gewünschtem Maße nach radial innen verformt, um hohe Klemmkräfte auf das durchgesteckte Kabel aufzubringen. Durch die an dem Klemmringende ausgebildete Schrägflanke, welches dem Dichteinsatz abgewandt ist, ist eine Einführhilfe für den einzusteckenden Schlauch gebildet, so daß dieser zentrisch geführt und ohne Behinderung in den entsprechenden Hohlraum der Verschraubung eingeschoben werden kann.

Durch diese Ausbildung wird eine vorzügliche Klemmung und Dichtwirkung sowohl des durchgeführten Kabels als auch des eingesteckten Schlauchendes erreicht, wobei zudem die Baulänge der Verschraubung nur der Baulänge einer normalen Verschraubung entspricht, die also keine zusätzliche Schlauchverschraubung aufweist.

Bevorzugt ist vorgesehen, daß der Klemmring aus federelastischem Werkstoff besteht und mit Klemmsitz auf das Ende eines in die Verschraubung eingeschobenen Schlauches aufsteckbar ist, wobei der Klemmringschlitz bei angezogener Druckschraube vollständig oder mindestens fast vollständig geschlossen ist.

Durch diese Ausbildung klemmt der Klemmring nach dem Einstecken des Schlauches schon aufgrund der eigenen Federelastizität auf diesem Schlauch, so daß die Teile quasi schwer verlierbar aneinander gehaltert sind.

Eine besonders bevorzugte Weiterbildung wird darin gesehen, daß der Schlauch als Wellschlauch mit ringförmigen Erhebungen und Rillen ausgebildet ist und der Klemmring mit der nach radial innen gerichteten Endkante der Klemmkante in die erste von zwei Erhebungen begrenzte Rille des Wellschlauchendes einrastbar ist.

Durch diese Ausbildung kann der Wellschlauch in die Verschraubung eingesteckt werden, wobei der Klemmring in die erste Rille des Wellschlauches eingreift und so eine nahezu unverlierbare Halterung ermöglicht, selbst wenn die Druckschraube vollständig von der Verschraubung gelöst wird. Die Druckschraube bleibt dann samt Klemmring auf dem Wellschlauch gehalten und kann nicht von dem freien Ende des Wellschlauches abgestreift werden.

Weiterhin wird als vorteilhaft angesehen, wenn der Klemmring gerade, schräge oder labyrinthartige Enden aufweist.

Insbesondere wird durch die schräge oder labyrinthartige Ausbildung der Enden des Klemmringes eine noch verbesserte Dichtwirkung bezüglich des eingeklemmten Schlauches erreicht.

Ein Ausführungsbeispiel der Erfindung ist in der Zeichnung dargestellt und im folgenden näher beschrieben.

Es zeigt:
- Figur 1: eine kombinierte Schlauch- und Kabelverschraubung in Ansicht, teilweise geschnitten;
- Figur 2 bis 4: unterschiedliche Ausbildungen des Schlitzes des Klemmringes;

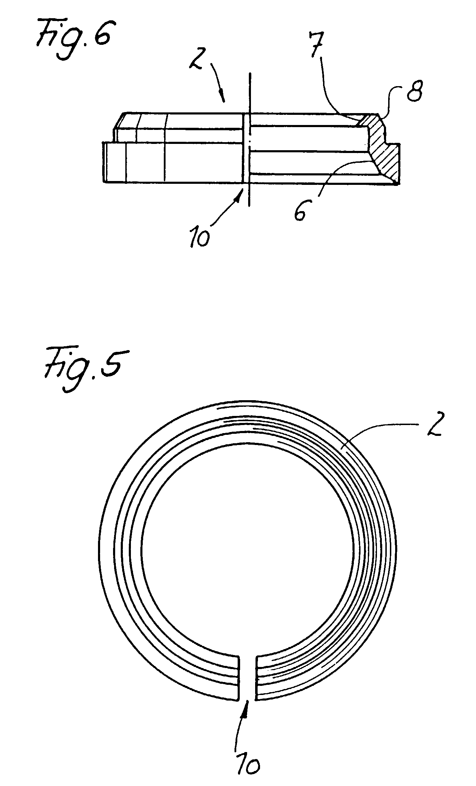

- Figur 5: einen Klemmring in Draufsicht;
- Figur 6: einen Klemmring in Seitenansicht, teilweise geschnitten.

Die kombinierte Schlauch- und Kabelverschraubung besteht im wesentlichen aus einem Doppelnippel 5, an dessen Stelle auch eine Winkelverschraubung, also ein abgewinkeltes Element mit Gewindeenden eingesetzt werden kann. Der Doppelnippel weist auf seinem Umfang ein Polygon zum Angriff eines Betätigungswerkzeuges auf. Der Doppelnippel 5 ist mit einem Dichteinsatz 4 aus elastischem Material versehen. Auf den Doppelnippel ist eine Druckschraube 3 aufgeschraubt. Zwischen einer Randkante der Druckschraube 3 und dem Dichteinsatz ist ein Klemmring 2 angeordnet. Der Klemmring 2 dient als Klemmeinrichtung für einen Hüllschlauch 1, der im Ausführungsbeispiel als Wellschlauch ausgebildet ist.

Der in die Druckschraube 3 eingesetzte, quer geschlitzte Klemmring 2 weist an seinem dem Dichteinsatz 4 zugewandten Ende radial innenliegend eine Schrägflanke 6 oder ballige Flanke auf, wobei im Ausführungsbeispiel diese Flanke zunächst von radial außen in einem Winkel von 60° beginnt und dann in einem Winkel von 30° bezogen auf die Mittelachse des Klemmringes verläuft. Diese Schrägflanke 6 wirkt beim Anziehen der Druckschraube 3 auf den Dichteinsatz 4 im Sinne der Abdichtung ein.

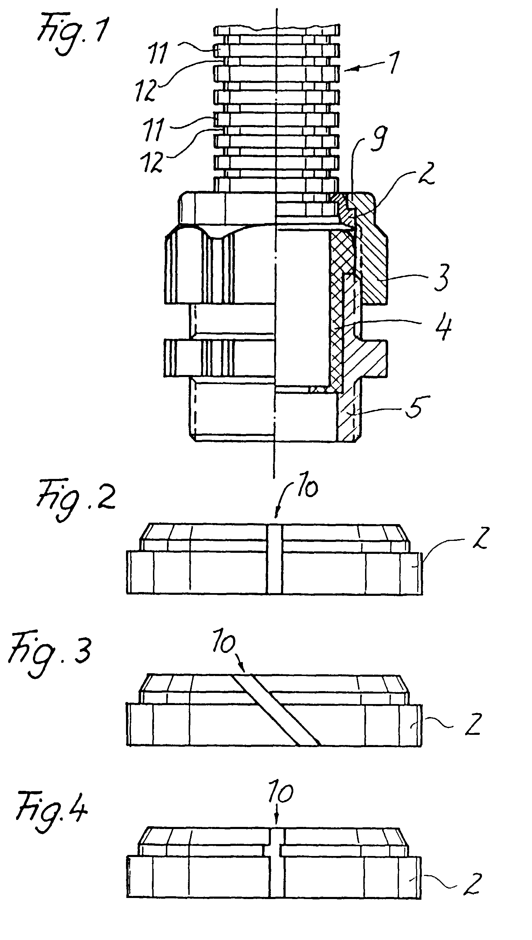

Der Klemmring 2 weist an seinem dem Dichteinsatz 4 abgewandten Ende radial innen eine Schrägflanke 7 auf, die als Einführhilfe und Klemmkante für einen eingesteckten, bis an den Dichteinsatz reichenden Schlauch 1 dient. Radial außen weist der Klemmring an eben dieser Seite einen balligen oder geschrägten Bereich 8 auf, der im Ausführungsbeispiel um etwa 30° nach innen bezogen auf den Klemmring geneigt ist. Der ballige oder geschrägte Bereich 8 durchgreift in der Montagesollposition gemäß Figur 1 einen nach radial innen gerichteten Kragen 9 an dem dem Dichteinsatz 4 abgewandten Ende der Druckschraube 3. Beim Anziehen der Druckschraube 3 gleitet der Kragen 9 an der Schräge 8 entlang und drängt somit den Klemmring und vorallem dessen Schrägflanke 7 mit ihrer Randkante gegen den durchgesteckten Schlauch, was zu einer ausreichenden und vorzüglichen Abdichtung führt und wobei gleichzeitig der Schlitz 10 des Klemmringes 2 geschlossen wird. Bei weiterem Schraubvorschub der Druckschraube 3 wird der Klemmring 2 und der Schlauch 1 axial von der Druckschraube 3 mitgenommen und der Klemmring drückt mit seiner Schrägflanke 6 auf die entsprechende Korrespondenzfläche des Dichteinsatzes 4, so daß dieser zum Zwecke der Klemmung des durchgesteckten Kabels entsprechend verformt wird.

Der Klemmring 2 besteht vorzugsweise aus federelastischem Kunststoff und ist mit Klemmsitz auf das Ende des in die Verschraubung eingeschobenen Schlauches 1 aufgesteckt. Der im Ausführungsbeispiel als Wellschlauch ausgebildete Schlauch 1 weist ringförmige Erhebungen 11 und zwischen diesen Rillen 12 auf. Der Klemmring 2 ist mit seiner nach radial innen gerichteten Endkante am Bereich 7, also der Klemmkante, in die erste von zwei Erhebungen 11 begrenzte Rille 12 des Wellschlauchendes eingerastet, wie insbesondere aus Figur 1 ersichtlich.
Wie aus den Figuren 2 bis 4 ersichtlich, kann der Klemmring 2 gerade, schräge oder labyrinthartige Enden aufweisen, so daß der entsprechende Schlitz 10 koaxial zur Mittelachse des Sprengringes 2 oder schräg dazu oder labyrinthartig verläuft. Durch die schräge oder labyrinthartige Ausbildung wird die Dichtwirkung noch verbessert.

Die Erfindung ist nicht auf das Ausführungsbeispiel beschränkt, sondern im Rahmen der Offenbarung vielfach variabel.

## Patentansprüche

1. Kombinierte Schlauch- und Kabelverschraubung, bestehend aus einem Doppelnippel mit Dichteinsatz und Druckschraube als Kabelklemmverschraubung sowie einer Klemmeinrichtung für einen Hüllschlauch, **dadurch gekennzeichnet,** daß in die Druckschraube (3) ein quer geschlitzter Klemmring (2) eingesetzt ist, der an seinem dem Dichteinsatz (4) zugewandten Ende radial innenliegend eine Schrägflanke (6) oder ballige Flanke aufweist, die auf den Dichteinsatz (4) beim Anziehen der Druckschraube (3) einwirkt, daß der Klemmring (2) an seinem dem Dichteinsatz (4) abgewandten Ende radial innen eine Schrägflanke (7) als Einführhilfe und Klemmkante für einen eingesteckten, bis an den Dichteinsatz (4) reichenden Schlauch (1) aufweist und radial außen einen balligen oder geschrägten Bereich (8) aufweist, der einen nach radial innen gerichteten Kragen (9) an dem dem Dichteinsatz (4) abgewandten Ende der Druckschraube (3) durchgreift und beim Anziehen der Druckschraube (3) nach radial innen drängbar ist.

2. Kombinierte Schlauch- und Kabelverschraubung nach Anspruch 1, **dadurch gekennzeichnet,** daß der Klemmring (2) aus federelastischem Werkstoff besteht und mit Klemmsitz auf das Ende eines in die Verschraubung eingeschobenen Schlauches (1) aufsteckbar ist, wobei der Klemmringschlitz (10) bei angezogener Druckschraube (3) vollständig oder mindestens fast vollständig geschlossen ist.

3. Kombinierte Schlauch- und Kabelverschraubung nach Anspruch 1 oder 2, **dadurch gekennzeichnet,** daß der Schlauch (1) als Wellschlauch mit ringförmigen Erhebungen (11) und Rillen (12) ausgebildet ist und der Sprengring (2) mit der nach radial innen gerichteten Endkante (bei 7) der Klemmkante in die erste von zwei Erhebungen (11) begrenzte Rille (12) des Wellschlauchendes einrastbar ist.

4. Kombinierte Schlauch- und Kabelverschraubung nach einem der Ansprüche 1 bis 3, **dadurch gekennzeichnet,** daß der Klemmring (2) gerade schräge oder labyrinthartige Enden aufweist.

## Claims

1. Combined threaded connection for hose and cable, comprising a double nipple with sealing insert and clamping screw as threaded cable clamp as well as a clamping device for a sheathing hose, characterized in that there is inserted in the clamping screw (3) a transversely slotted clamping ring (2) which has, in a radially inner position at its end adjacent to the sealing insert (4), an inclined edge (6) or crowned edge which acts on the sealing insert (4) when the clamping screw (3) is tightened up, in that the clamping ring (2) has, in a radially inner position at its end remote from the sealing insert (4), an inclined edge (7) as feed-in aid and clamping edge for an inserted hose (1) which extends up to the sealing insert (4), and has, in a radially outer position, a crowned or inclined region (8) which engages through a collar (9), which is directed radially inwardly at that end of the clamping screw (3) which is remote from the sealing insert (4), and which can be forced radially inwardly when the clamping screw (3) is tightened up.

2. Combined threaded connection for hose and cable according to Claim 1, characterized in that the clamping ring (2) is composed of resilient material and can be pushed onto the end of a hose (1) inserted into the threaded connection to form a press fit, under which circumstances the clamping ring slot (10) is completely or at least almost completely closed when the clamping screw (3) is tightened up.

3. Combined threaded connection for hose and cable according to Claim 1 or 2, characterized in that the hose (1) is formed as a corrugated hose having annular raised sections (11) and grooves (12) and the snap ring (2) can be locked into the first groove (12), bounded by two raised sections (11), of the corrugated hose end by means of the radially inwardly directed terminal edge (at 7) of the clamping edge.

4. Combined threaded connection for hose and cable according to one of Claims 1 to 3, characterized in that the clamping ring (2) has straight inclined or labyrinthtype ends.

## Revendications

1. Raccord à vis combiné pour câble et tuyau souple, constitué par un raccord fileté double qui est pourvu d'une pièce insérée d'étanchéité et d'une vis de compression servant de raccord à vis pour le serrage du câble, ainsi que par un dispositif de serrage destiné à une gaine, caractérisé par le fait qu'une bague de serrage fendue transversalement (2) est introduite dans la vis de compression (3), et qu'elle présente à son extrémité tournée vers la pièce insérée d'étanchéité (4) un flanc oblique (6) ou un flanc bombé qui est situé à l'intérieur dans le sens radial et qui agit sur la pièce insérée d'étanchéité (4) lorsque l'on visse la vis de compression (3), et par le fait que la bague de serrage (2) présente à son extrémité opposée à la pièce insérée d'étanchéité (4), intérieurement dans le sens radial, un flanc oblique (7) servant à faciliter l'introduction d'un tuyau souple enfoncé (1) qui arrive jusqu'à la pièce insérée d'étanchéité (4) à laquelle il sert de bord de serrage, et qu'elle présente à l'extérieur dans le sens radial une zone bombée ou oblique (8) qui traverse un collet (9) dirigé vers l'intérieur dans le sens radial sur l'extrémité de la vis de compression (3) opposée à la pièce insérée d'étanchéité (4) et qui peut être poussée vers l'intérieur dans le sens radial lorsque l'on visse la vis de compression (3).

2. Raccord à vis combiné pour câble et tuyau souple selon la revendication 1, caractérisé par le fait que la bague de serrage (2) est constituée par une matière élastique, et qu'elle peut être enfoncée avec un ajustement serré sur l'extrémité d'un tuyau souple (1) qui est enfoncé dans le raccord à vis, cependant que la fente (10) de la bague de serrage est complètement fermée, ou du moins presque complètement fermée, lorsque la vis de compression (3) est vissée.

3. Raccord à vis combiné pour câble et tuyau souple selon la revendication 1 ou 2, caractérisé par le fait que le tuyau souple (1) est réalisé sous la forme d'un tuyau souple ondulé qui est pourvu de nervures annulaires (11) et de gorges (12), et que, par le bord d'extrémité du bord de serrage qui est dirigé vers l'intérieur dans le sens radial (en 7), la bague de serrage (2) est encliquetée dans la première gorge (12) délimitée par deux nervures (11) de l'extrémité du tuyau souple ondulé.

4. Raccord à vis combiné pour câble et tuyau souple selon l'une des revendications 1 à 3, caractérisé par le fait que la bague de serrage (2) présente des extrémités droites, obliques ou en forme de labyrinthe.
